# FASCICULE DE BREVET EUROPEEN

(11) **EP 1 557 572 B1**
(45) Date de publication et mention de la délivrance du brevet: **15.07.2009**
(21) Numéro de dépôt: 05290128.7
(22) Date de dépôt: 20.01.2005
(51) Int. Cl.: F16B 2/24

(54) **Attache pour la fixation de deux pièces l'une sur l'autre**
Klipp zur gegenseitigen Befestigung von zwei Teilen
Clip for fixation of two pieces one another

(30) Priorité: 21.01.2004 FR 0400555
(43) Date de publication de la demande: 27.07.2005
(73) Titulaire: Attax, 75116 Paris (FR)
(72) Inventeur: Dubost, Dominique, 78170 La Celle St. Cloud (FR); De Azevedo, Helder, 28700 Sainville (FR)
(74) Mandataire: Habasque, Etienne J. Jean-François

(56) Documents cités:
- EP-A- 0 262 282
- EP-A- 0 682 184
- GB-A- 2 160 579
- GB-A- 2 191 814

## Description

La présente invention concerne une attache pour la fixation de deux pièces l'une sur l'autre.

On pourra par exemple se reporter au document GB-A-2 160 579 pour un exemple d'une telle attache.

De telles attaches trouvent de nombreuses applications en particulier dans l'industrie automobile pour assurer la fixation de deux pièces d'équipement d'un véhicule l'une sur l'autre.

Il existe en effet dans l'état de la technique, des attaches élastiques de ce type qui présentent la forme générale d'un V comportant une portion intermédiaire à partir de laquelle s'étendent des ailes latérales.

Ces ailes latérales de l'attache sont alors munies de moyens formant patte externe comportant des moyens en forme de crochet élastique à franchissement de point dur, d'accrochage de l'attache sur les bords d'une lumière par exemple d'une première pièce et de moyens formant patte interne munis de moyens d'accrochage de la seconde pièce afin d'assurer la fixation de cette seconde pièce sur la première.

Dans l'état de la technique, les moyens formant patte interne de l'attache s'étendent à partir de la portion intermédiaire de celle-ci, sur une partie de la hauteur des moyens formant patte externe et définissent un passage de réception de la seconde pièce.

Cependant, les attaches de ce type présentent un certain nombre d'inconvénients, notamment au niveau de leur encombrement et du fait que, dans certaines applications, la place disponible pour la fixation des deux pièces l'une sur l'autre n'est pas suffisante pour permettre l'utilisation d'une telle attache.

Le but de l'invention est donc de résoudre ces problèmes.

A cet effet, l'invention a pour objet une attache élastique pour la fixation de deux pièces l'une sur l'autre, comportant une portion en forme de pince adaptée pour être accrochée élastiquement sur un bord de la première pièce et à partir d'une branche de laquelle s'étendent au moins deux pattes d'accrochage dont une première comporte une portion repliée munie de moyens d'accrochage sur la première pièce et dont une seconde comporte des moyens en forme de crochet élastique à franchissement de point dur, d'accrochage de l'attache et donc de la première pièce, sur un bord d'une lumière de la seconde pièce, caractérisée en ce que la seconde patte est une patte unique centrale, de part et d'autre de laquelle sont prévues respectivement deux pattes latérales faisant partie de la première patte.

Selon d'autres caractéristiques :
- les extrémités des portions repliées des premières pattes sont reliées par une plaque d'accrochage sur la première pièce ;
- la plaque d'accrochage comporte des moyens d'accrochage en forme de harpon ;
- la plaque d'accrochage est adaptée pour venir en appui contre des moyens de butée de la première pièce ;
- les moyens de butée sont formés par des parties en relief de la première pièce ;
- les moyens de butée sont formés par un bord d'une lumière de la première pièce ;
- les moyens de butée sont formés par un épaulement de la première pièce ;
- la zone de pliage de la ou chaque première patte est située au niveau des moyens en forme de crochet élastique de la seconde patte ;
- elle est réalisée d'une seule pièce à partir d'un flan de tôle par découpe et déformation de celui-ci; et
- la portion en forme de pince comporte des moyens en forme de harpon.

L'invention sera mieux comprise à la lecture de la description qui va suivre, donnée uniquement à titre d'exemple et faite en se référant aux dessins annexés, sur lesquels : ,
- la Fig.1 représente une vue de côté d'une attache élastique selon l'invention en position de montage et de fixation de deux pièces l'une sur l'autre ; et
- la Fig.2 représente une vue en perspective d'une telle attache.

On a en effet représenté sur ces figures, une attache élastique qui est désignée par la référence générale 1 et qui permet d'assurer la fixation de deux pièces l'une sur l'autre, ces pièces étant formées par exemple par des pièces d'équipement d'un véhicule automobile.

L'une des pièces est désignée par la référence générale 2 sur ces figures, tandis que l'autre pièce est désignée par la référence générale 3.

La seconde pièce, telle que par exemple la pièce 3, comporte une lumière désignée par la référence générale 4, dans laquelle est engagée l'attache 1. La première pièce, par exemple 2, est quant à elle accrochée sur l'attache 1.

A cet effet, cette attache élastique comporte une portion en forme de pince désignée par la référence générale 5 adaptée pour être accrochée élastiquement sur un bord de la première pièce 2 et à partir de laquelle s'étendent au moins deux pattes d'accrochage désignées par les références générales 6 et 7.

En fait, et dans l'exemple de réalisation représenté, trois pattes d'accrochage s'étendent à partir de la branche correspondante de la pince. L'une de ces pattes est une patte unique centrale désignée par la référence générale 6 qui comporte des moyens en forme de crochet élastique à franchissement de point dur désignés par la référence générale 8 sur ces figures, d'accrochage de l'attache et donc de la première pièce sur un bord de la lumière de la seconde pièce.

De chaque côte de cette patte unique centrale 6 est prévue une patte d'accrochage de l'attache sur la première pièce 2.

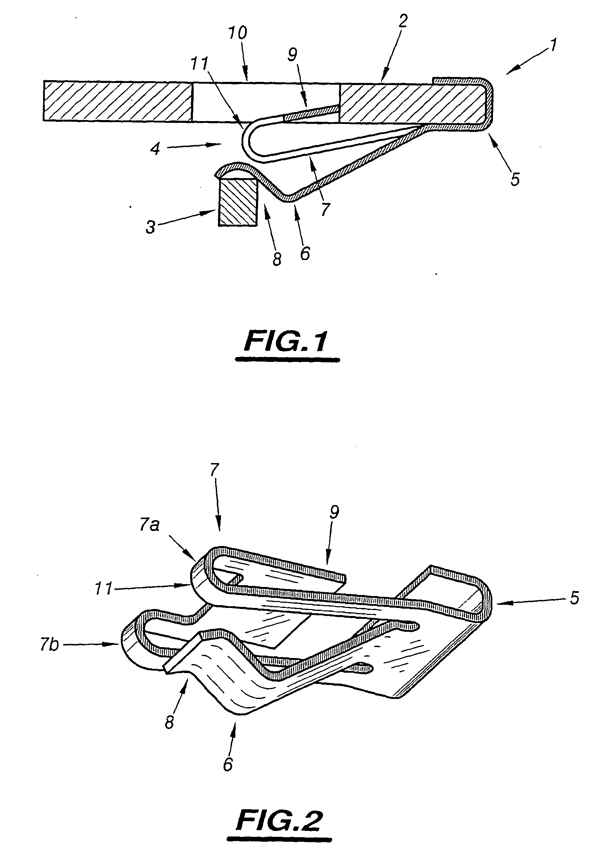

En fait et comme cela est visible plus clairement sur la figure 2, deux pattes latérales 7a et 7b sont prévues et chacune de ces pattes comporte une portion repliée munie de moyens d'accrochage sur la première pièce 2.

En fait, les extrémités repliées de ces premières pattes 7a et 7b sont reliées par une plaque d'accrochage désignée par la référence générale 9.

Cette plaque d'accrochage 9 est alors adaptée pour coopérer avec des moyens complémentaires de la première pièce 2 pour assurer un blocage de l'attache sur celle-ci.

Différents modes de réalisation de ces moyens d'accrochage peuvent être envisagés.

Ainsi, par exemple, ces moyens d'accrochage peuvent être formés par des organes en forme de harpon de cette plaque d'accrochage.

Dans l'exemple de réalisation représenté, cette plaque d'accrochage est adaptée pour venir en appui contre des moyens de butée de la première pièce 2.

Comme cela est illustré, ces moyens de butée sont formés par exemple par un bord d'une lumière 10 de la première pièce 2.

Bien entendu, ces moyens de butée peuvent être formés par des parties en relief de cette première pièce présentant d'autres formes qu'une lumière.

Ainsi par exemple, un épaulement peut également être envisagé.

On notera également que la zone de pliage par exemple 11 de la patte ou de chaque première patte 7a, 7b est située au niveau des moyens 8 en forme de crochet élastique à franchissement de point dur de l'autre patte.

On conçoit alors qu'une telle attache présente un certain nombre d'avantages, notamment au niveau du maintien sans jeu en position de la seconde pièce par rapport à la première et de la possibilité d'utiliser une telle attache lorsque la place disponible est réduite entre les deux pièces.

Bien entendu, d'autres modes de réalisation encore de cette attache peuvent être envisagés, et l'on notera que celle-ci peut être réalisée d'une seule pièce par découpe et déformation, par exemple d'un flan de tôle.

Ainsi par exemple, la portion en forme de pince peut également comporter des moyens en forme de harpon de maintien de celle-ci sur la pièce correspondante.

## Revendications

1. Attache élastique pour la fixation de deux pièces l'une sur l'autre, comportant une portion en forme de pince (5) adaptée pour être accrochée élastiquement sur un bord de la première pièce (2) et à partir d'une branche de laquelle s'étendent au moins deux pattes d'accrochage (6, 7) dont une première (7) comporte une portion repliée munie de moyens d'accrochage (9) sur la première pièce (2) et dont une seconde (6) comporte des moyens (8) en forme de crochet élastique à franchissement de point dur, d'accrochage de l'attache et donc de la première pièce (2), sur un bord d'une lumière (4) de la seconde pièce (3),
**caractérisée en ce que** la seconde patte est une patte unique centrale (6), de part et d'autre de laquelle sont prévues respectivement deux pattes latérales (7a, 7b) faisant partie de la première patte (7).

2. Attache selon la revendication 1, **caractérisée en ce que** les extrémités des portions repliées des premières pattes (7a,7b) sont reliées par une plaque d'accrochage (9) sur la première pièce (2).

3. Attache selon la revendication 2, **caractérisée en ce que** la plaque d'accrochage (9) comporte des moyens d'accrochage en forme de harpon.

4. Attache selon la revendication 2, **caractérisée en ce que** la plaque d'accrochage (9) est adaptée pour venir en appui contre des moyens de butée de la première pièce (2).

5. Attache selon la revendication 4, **caractérisée en ce que** les moyens de butée sont formés par des parties en relief de la première pièce.

6. Attache selon la revendication 5, **caractérisée en ce que** les moyens de butée sont formés par un bord d'une lumière (10) de la première pièce (2).

7. Attache selon la revendication 5**, caractérisée en ce que** les moyens de butée sont formés par un épaulement de la première pièce.

8. Attache selon l'une quelconque des revendications précédentes, **caractérisée en ce que** la zone de pliage (11) de la ou chaque première patte (7a,7b) est située au niveau des moyens en forme de crochet élastique (8) de la seconde patte (6).

9. Attache selon l'une quelconque des revendications précédentes, **caractérisée en ce qu'**elle est réalisée d'une seule pièce à partir d'un flan de tôle par découpe et déformation de celui-ci.

10. Attache selon l'une quelconque des revendications précédentes, **caractérisée en ce que** la portion en forme de pince comporte des moyens en forme de harpon.

## Claims

1. A resilient fastener for fixing two parts onto each other comprising a pincer-shaped portion (5) adapted to be hooked resiliently over an edge of the first part (2) and from a branch of which at least two hooking limbs (6, 7) extend, a first (7) of which comprises a folded portion provided with hooking means (9) on the first part (2) and a second (6) of which comprises means (8) in the form of a resilient hook with a cross-over with a hard point for hooking the fastener and so the first part (2) on an edge of an opening (4) of the second part (3),
**characterised in that** the second limb is a single central limb (6) to either side of which are respectively provided two lateral limbs (7a, 7b) forming part of the first limb (7).

2. The fastener according to Claim 1, **characterised in that** the ends of the folded portions of the first limbs (7a, 7b) are joined by a hooking plate (9) on the first part (2).

3. The fastener according to Claim 2, **characterised in that** the hooking plate (9) comprises harpoon-shaped hooking means.

4. The fastener according to Claim 2, **characterised in that** the hooking plate (9) is adapted to come to rest against stop means of the first part (2).

5. The fastener according to Claim 4, **characterised in that** the stop means are formed by parts of the first part in relief.

6. The fastener according to Claim 5, **characterised in that** the stop means are formed by an edge of an opening (10) of the first part (2).

7. The fastener according to Claim 5, **characterised in that** the stop means are formed by a shoulder of the first part.

8. The fastener according to any of the preceding claims, **characterised in that** the folding zone (11) of the or each first limb (7a, 7b) is located on the means in the shape of a resilient hook (8) of the second limb (6).

9. The fastener according to any of the preceding claims, **characterised in that** it is produced from a single piece of sheet metal by cutting and deforming the latter.

10. The fastener according to any of the preceding claims, **characterised in that** the pincer-shaped portion comprises harpoon-shaped means.

## Patentansprüche

1. Elastischer Klipp zur gegenseitigen Befestigung von zwei Teilen, einen klemmenförmigen Teil (5) umfassend, der elastisch an einem Rand des ersten Teils (2) befestigt werden kann und der einen Schenkel aufweist, von dem wenigstens zwei Befestigungsklauen (6, 7) ausgehen: eine erste (7) mit einem zurückgebogenen Teil mit Einrichtungen (9) zur Befestigung des ersten Teils (2), und eine zweite (6) mit hakenförmigen elastischen Druckpunktüberwindungseinrichtungen (8) zur Befestigung des Klipps - und folglich des ersten Teils (2) - an einem Rand einer Öffnung (4) des zweiten Teils (3),
**dadurch gekennzeichnet, dass** die zweite Klaue eine einzige zentrale Klaue (6) ist, beiderseits der zwei Seitenklauen (7a, 7b), jeweils Teil der ersten Klaue (7), vorgesehen sind.

2. Klipp nach Anspruch 1, **dadurch gekennzeichnet, dass** die Enden der zurückgebogenen Teile der ersten Klauen (7a,7b) verbunden sind durch eine zur Befestigung an dem ersten Teil (2) dienenden Platte (9).

3. Klipp nach Anspruch 2, **dadurch gekennzeichnet, dass** die Befestigungsplatte (9) harpunenförmige Befestigungseinrichtungen umfasst.

4. Klipp nach Anspruch 2, **dadurch gekennzeichnet, dass** die Befestigungsplatte (9) so angepasst ist, dass sie sich auf Anschlagseinrichtungen des ersten Teils (2) abstützt.

5. Klipp nach Anspruch 4, **dadurch gekennzeichnet, dass** die Anschlagseinrichtungen durch erhabene Teile bzw. Abschnitte des ersten Teils gebildet werden.

6. Klipp nach Anspruch 5, **dadurch gekennzeichnet, dass** die Anschlagseinrichtungen durch einen Rand einer Öffnung (10) des ersten Teils (2) gebildet werden.

7. Klipp nach Anspruch 5, **dadurch gekennzeichnet, dass** die Anschlagseinrichtungen durch eine Schulter des ersten Teils gebildet werden.

8. Klipp nach einem der vorangehenden Ansprüche, **dadurch gekennzeichnet, dass** die Biegungszone (11) der oder jeder Klaue (7a,7b) sich auf Höhe der hakenförmigen elastischen Einrichtungen (8) der zweite Klaue (6) befinden.

9. Klipp nach einem der vorangehenden Ansprüche, **dadurch gekennzeichnet, dass** er durch Stanzung und Verformung aus einem einzigen Blechplättchen hergestellt wird.

10. Klipp nach einem der vorangehenden Ansprüche, **dadurch gekennzeichnet, dass** der klemmenförmige Teil harpunenförmige Einrichtungen umfasst.
